# FASCICULE DE BREVET EUROPEEN

(11) **EP 0 588 719 B1**
(45) Date de publication et mention de la délivrance du brevet: **20.11.1996**
(21) Numéro de dépôt: 93402249.2
(22) Date de dépôt: 15.09.1993
(51) Int. Cl.: B60R 19/26, B62D 25/08

(54) **Pare-chocs déboîtable pour véhicule**
Ausschwenkbarer Stossfänger für Fahrzeuge
Tiltable bumper for vehicles

(30) Priorité: 16.09.1992 FR 9211052
(43) Date de publication de la demande: 23.03.1994
(73) Titulaire: ECIA - EQUIPEMENTS ET COMPOSANTS POUR L'INDUSTRIE AUTOMOBILE, F-25400 Audincourt (FR)
(72) Inventeur: Laurent, Claude, F-25420 Voujeaucourt (FR)
(74) Mandataire: Polus, Camille

(56) Documents cités:
- FR-A- 2 125 990
- US-A- 4 372 595

## Description

La présente invention concerne les véhicules automobiles terrestres et a plus particulièrement pour objet un dispositif de montage d'un pare-chocs déboîtable sur un tel véhicule.

Dans de nombreux secteurs industriels, il est nécessaire d'absorber l'énergie résultant de chocs importants et c'est tout spécialement le cas du domaine des véhicules automobiles terrestres dont il faut assurer la sécurité des occupants en cas de collisions ou d'accidents.

Pour la sécurité des véhicules automobiles terrestres, on a déjà proposé de construire notamment leur partie antérieure de manière à ce qu'elle offre une protection en zones ou tranches successives qui sont mises à contribution progressivement de l'avant vers l'arrière, repérées par rapport à l'axe longitudinal du véhicule. C'est ainsi qu'on distingue habituellement une zone pour les "petits" chocs se produisant pour une vitesse relative ne dépassant pas 4 km/h environ et qui est constituée par la "peau" ou garniture d'un pare-chocs ou bouclier, une zone pour les chocs "moyens" se produisant pour une vitesse relative de l'ordre de 4-10 km/h environ et qui est constituée par la "poutre" ou similaire formant le pare-chocs ou bouclier proprement dit qui entre 4-8 km/h environ se déforme élastiquement réversiblement et qui entre 8-10 km/h environ se déforme non réversiblement, une zone pour les "grands" chocs se produisant pour une vitesse relative de l'ordre de 10-12 km/h environ et qui est constituée par des "tampons" ou similaires associés à la structure ou coque du véhicule en amont des longerons qui la prolongent vers l'avant, et enfin une zone pour les chocs "violents" se produisant pour une vitesse relative de l'ordre de 20-25 km/h environ ou plus et qui est constituée par les longerons ou similaires eux-mêmes. Une telle configuration permet en particulier une réparation éventuelle, facilitée par un échange standard de la seule zone atteinte après vérification immédiate que les longerons n'ont pas été affectés, ce qui nécessiterait un passage "au marbre" de la coque ou structure pour la dégauchir.

Diverses solutions ont déjà été proposées. Des exemples de solution sont, par exemple, exposés dans les documents FR-A-2 615 156, FR-A-2 655 605, FR-A-2 671 044 et FR-A-2 677 943 (FR 87-06 734, FR 89-16 413, FR 90-16 495 et FR 91-07 539) de la Demanderesse.

Si ces solutions donnent relativement satisfaction, elles sont toutefois compliquées car elles nécessitent la mise en oeuvre d'absorbeurs d'énergie de structure et de nature complexes.

Toutes ces solutions ont en commun un même inconvénient majeur. En effet, lorsqu'un tel pare-chocs est soumis à un choc avec une composante importante parallèle à l'axe longitudinal du véhicule, le pare-chocs se rapproche de la carrosserie et de ce qu'elle porte, soit en reculant s'il s'agit d'un pare-chocs avant, soit en avançant s'il s'agit d'un pare-chocs arrière en produisant des déformations et/ou des ruptures des parties que le pare-chocs touche. On voit donc que si le pare-chocs absorbe bien de l'énergie, il provoque très souvent aussi des dégâts du fait même de son comportement au cours de l'absorption d'énergie qu'il assure.

Le but de l'invention est de remédier à ce type de situation à l'aide d'un dispositif de montage du pare-chocs sur la coque ou structure du véhicule, qui est tel que le pare-chocs devient en quelque sorte "déboitable" puisque sous l'action d'un effort à composante longitudinale ou oblique d'une intensité supérieure à un seuil déterminé préfixé, le pare-chocs se déplace en suivant une trajectoire de préférence courbe qui le rapproche du sol.

L'invention a pour objet un dispositif de montage d'un pare-chocs déboîtable pour véhicule automobile terrestre destiné à équiper au moins l'une des extrémités antérieure et postérieure de la coque d'un véhicule. Ce dispositif de montage est caractérisé en ce que, en section droite par un plan vertical parallèle à l'axe longitudinal de la coque, il a la configuration d'un polygone déformable dont les sommets sont situés dans ce plan.

L'invention apparaîtra à la lecture de la description et des revendications qui suivent ainsi qu'à l'examen du dessin annexé, donné seulement à titre d'exemple, où :
- la Figure 1 illustre partiellement une vue latérale de l'extrémité antérieure de la coque d'un véhicule équipé d'un pare-chocs déboîtable suivant l'invention, en position normale;
- la Figure 2 est une vue analogue à celle de la Figure 1 du pare-chocs déboîtable selon l'invention en cours de déplacement:
- la Figure 3 est une vue schématique en section longitudinale d'un mode de réalisation d'un dispositif selon l'invention; et
- les Figures 4 et 5 sont des vues analogues à celle de la Figure 3 d'autres variantes d'exécution de l'invention où le dispositif est illustré en trait discontinu à l'état normal et en trait continu au cours de la déformation conduisant au déboîtement du pare-chocs.

Les véhicules automobiles et en particulier leurs pare-chocs étant bien connus dans la technique, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants de l'invention avant d'en exposer la fabrication au besoin, et le fonctionnement.

L'invention est destinée au montage d'un pare-chocs 10 pour véhicule automobile terrestre conçu pour équiper au moins l'une des extrémités antérieure et postérieure d'une coque ou structure 20 du véhicule afin de rendre ce pare-chocs "déboîtable" relativement à la coque.

Le pare-chocs 10 est constitué, essentiellement, d'une poutre 11 orientée transversalement, qui est habituellement revêtue à l'extérieur d'une garniture ou "peau" 12 et qui est munie de supports 13 pour son montage.

La coque ou structure 20 d'un véhicule se termine par des parties d'extrémité antérieure et postérieure dont seule l'extrémité antérieure est illustrée. Cette partie antérieure comprend, habituellement, un capot 201 ou similaire tel un haillon ou un couvercle, ainsi qu'un bloc optique 202 tel un projecteur route-croisement ou un groupe de signalisation servant au balisage à l'aide de feux de stationnement ou à l'avertissement à l'aide de feux stop, de feux indicateurs de changement de direction ou de phares de recul. Tout ceci est classique.

La coque ou structure 20 d'axe longitudinal 200 se prolonge le plus souvent par au moins un longeron 21 auquel est parfois associé un tampon 22 absorbeur d'énergie et qui est muni d'un support 23 coopérant avec le support 13 du pare-chocs pour le montage du pare-chocs.

Un dispositif 30 permet d'associer le pare-chocs 10 à la coque ou structure 20 de manière à rendre le pare-chocs déboîtable relativement à la coque afin qu'en cas de chocs relativement importants à composante longitudinale ou oblique d'une intensité supérieure à un seuil prédéterminé préfixé, le pare-chocs se déplace en suivant une trajectoire de préférence courbe qui le rapproche du sol.

Le dispositif 30, en section droite par un plan π vertical parallèle à l'axe longitudinal 200 de la coque 20, a la configuration d'un polygone 300 fermé, déformable dont les sommets 301 sont situés dans ce plan π.

De préférence, le polygone 300 se présente à la manière par exemple d'une boîte ou similaire, approximativement en parallélogramme.

Dans sa forme la plus simple, ce parallélogramme est constitué par un caisson de préférence métallique.

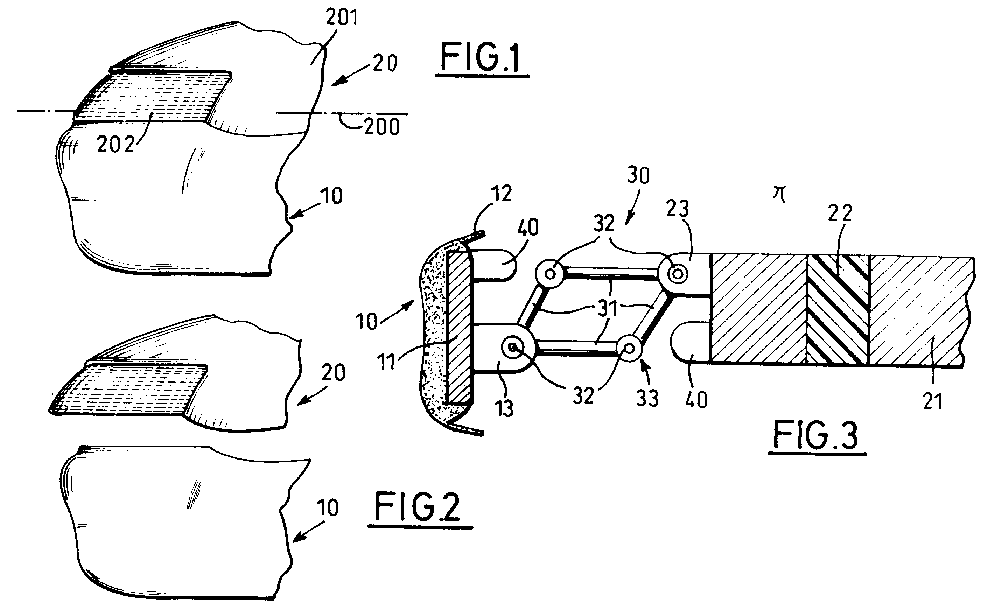

Suivant le mode de réalisation illustré sur la Figure 3, ce polygone 300 est formé par des biellettes 31 réunies de préférence par des articulations 32 dont l'une au moins est équipée d'un frein ou similaire tel une barre de torsion ou un amortisseur à friction qui a pour rôle de s'opposer à la déformation du parallélogramme.

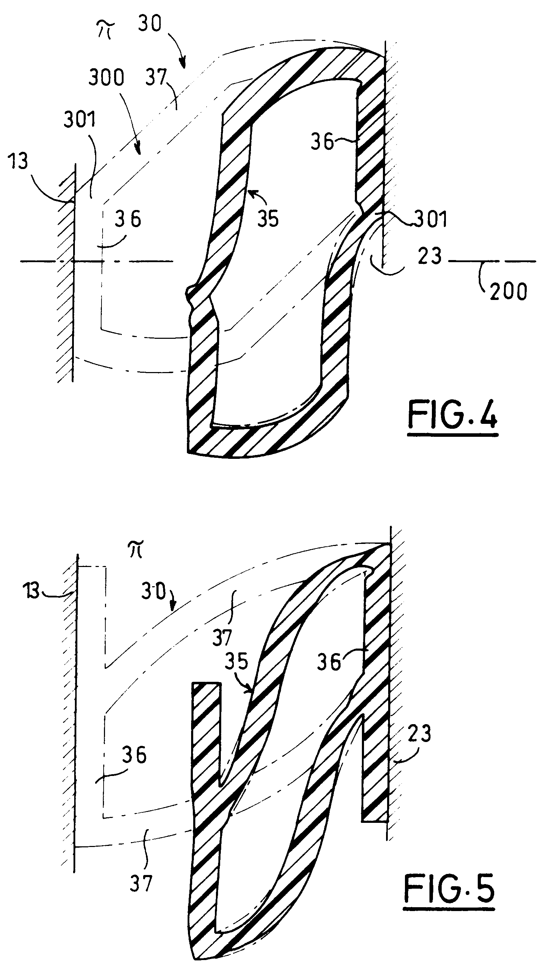

Selon d'autres variantes d'exécution illustrées sur les Figures 4 et 5, le polygone 300 est formé par un profilé 35 extrudé de préférence fait en un matériau à base d'une résine synthétique appropriée munie de charges ou de renforts en fibres. Il est clair que ce polygone peut être aussi obtenu à partir de tôles métalliques par exemple mécano-soudées.

Comme on le voit, en position initiale, ce profilé comprend deux côtés 36 rectilignes pratiquement orthogonaux à l'axe longitudinal 200 (Figures 4, 5) ou pratiquement parallèles à ce dernier (Figure 3) ainsi que deux autres côtés 37 au moins partiellement courbes (Figures 4, 5).

S'il y a lieu, au moins l'un des sommets 301 est d'épaisseur réduite afin de faciliter l'amorçage de la déformation du dispositif lorsqu'il est soumis à un choc qui dépasse le seuil préfixé.

S'il y a lieu, on utilise des butées 40 pour limiter l'amplitude du déboîtement du pare-chocs relativement à la coque dans une direction parallèle à l'axe longitudinal 200. Les butées 40 sont portées par le dispositif 30 ou bien pour partie par le pare-chocs 10 et pour partie par la coque 20. Grâce à ces butées, après une déformation d'amplitude donnée, le dispositif devient relativement rigide mécaniquement et les efforts subis par le pare-chocs sont alors transmis directement aux longerons et aux tampons par l'intermédiaire des butées.

Le frein 33 est par exemple constitué de disques empilés à la manière des disques d'un embrayage ou bien une barre de torsion.

Le dispositif selon l'invention est monté entre pare-chocs et coque à l'aide des supports 13 et 23 selon toute technique classique courante tels que par exemple vissage, soudage, rivetage, collage, etc..

On voit donc qu'en cas d'un choc dont l'énergie dépasse un seuil prédéterminé, une partie de l'énergie de ce choc est absorbée par torsion du dispositif qui produit donc un déplacement du pare-chocs qui évite que ce dernier vienne produire des dégâts sur les parties qui l'entourent.

Ce qui précède permet donc de comprendre l'intérêt qu'offre l'invention et les avantages qu'elle apporte.

## Revendications

1. Dispositif de montage d'un pare-chocs (10) déboîtable pour véhicule automobile terrestre destiné à équiper au moins l'une des extrémités antérieure et postérieure de la coque (20) du véhicule, caractérisé en ce que ce dispositif (30) en section droite par un plan (π) vertical parallèle à l'axe (200) longitudinal de la coque (20), a la configuration d'un polygone (300) déformable dont les sommets (301) sont situés dans ce plan (π).

2. Dispositif selon la revendication 1, caractérisé en ce que ce polygone (300) est approximativement un parallélogramme.

3. Dispositif selon la revendication 1 ou 2, caractérisé en ce que ce polygone (300) est formé par des biellettes (31) réunies par des articulations (32) dont au moins une est équipée d'un frein (33).

4. Dispositif selon la revendication 1 ou 2, caractérisé en ce que ce polygone (300) est formé par un profilé (35) extrudé voire mécanosoudé.

5. Dispositif selon la revendication 4, caractérisé en ce que ce profilé (35) comprend deux côtés (36) rectilignes pratiquement orthogonaux à l'axe longitudinal (200) et deux côtés (37) au moins partiellement courbes.

6. Dispositif selon la revendication 4 ou 5, caractérisé en ce que l'un au moins des sommets (301) est d'épaisseur réduite.

7. Dispositif selon l'une quelconque des revendications 4 à 6, caractérisé en ce que le profilé (35) est fait à base d'une résine synthétique.

8. Dispositif selon l'une quelconque des revendications 1 à 7, caractérisé en ce qu'il comprend des butées (40) pour limiter le déboîtement du pare-chocs (10) relativement à la coque (20) dans une direction parallèle à l'axe longitudinal (200).

9. Dispositif selon la revendication 8, caractérisé en ce que les butées (40) sont portées par le dispositif (30).

10. Dispositif selon la revendication 8, caractérisé en ce que les butées (40) sont portées pour partie par le pare-chocs (10) et pour partie par la coque (20).

## Claims

1. Device for mounting a dislocatable bumper (10) for a land motor vehicle, intended to equip at least one of the front and rear ends of the shell (20) of the vehicle, characterized in that this device (30) in cross-section through a vertical plane (π) parallel to the longitudinal axis (200) of the shell (20) has the configuration of a deformable polygon (300), the vertices (301) of which lie in this plane (π).

2. Device according to Claim 1, characterized in that this polygon (300) is approximately a parallelogram.

3. Device according to Claim 1 or 2, characterized in that this polygon (300) is formed by link rods (31) joined together by articulations (32), at least one of which is fitted with a brake (33).

4. Device according to Claim 1 or 2, characterized in that this polygon (300) is formed of an extruded or mechanically joined-together section piece (35).

5. Device according to Claim 4, characterized in that this section piece (35) comprises two straight sides (36) which are practically orthogonal to the longitudinal axis (200) and two sides (37) which are at least partly curved.

6. Device according to Claim 4 or 5, characterized in that at least one of the vertices (301) has a reduced thickness.

7. Device according to any one of Claims 4 to 6, characterized in that the section piece (35) is made based on a synthetic resin.

8. Device according to any one of Claims 1 to 7, characterized in that it comprises stops (40) to limit the dislocation of the bumper (10) relative to the shell (20) in a direction parallel to the longitudinal axis (200).

9. Device according to Claim 8, characterized in that the stops (40) are borne by the device (30).

10. Device according to Claim 8, characterized in that the stops (40) are borne in part by the bumper (10) and in part by the shell (20).

## Patentansprüche

1. Vorrichtung zur Montage eines ausschwenkbaren Stoßdämpfers (10) für ein Landkraftfahrzeug, die dazu bestimmt ist, zumindest eines der vorderen und hinteren Enden der Karosserie (20) des Fahrzeugs auszustatten, dadurch gekennzeichnet, daß diese Vorrichtung (30) im Querschnitt durch eine Vertikalebene (π) parallel zur Längsachse (200) der Karosserie (20) die Ausführung eines verformbaren Vielecks (300) aufweist, dessen Spitzen (301) sich in dieser Ebene (π) befinden.

2. Vorrichtung nach Anspruch 1, dadurch gekennzeichnet, daß dieses Vieleck (300) annähernd ein Parallelogramm ist.

3. Vorrichtung nach Anspruch 1 oder 2, dadurch gekennzeichnet, daß dieses Vieleck (300) von Schwingarmen (31) gebildet wird, die durch Gelenke (32) verbunden sind, von denen zumindest eines mit einer Bremse (33) ausgestattet ist.

4. Vorrichtung nach Anspruch 1 oder 2, dadurch gekennzeichnet, daß dieses Vieleck (300) von einem gespritzten oder mechanisch verschweißten Profil (35) gebildet wird.

5. Vorrichtung nach Anspruch 4, dadurch gekennzeichnet, daß dieses Profil (35) zwei geradlinige Seiten (36), die praktisch zu der Längsachse (200) orthogonal sind, und zwei zumindest teilweise gekrümmte Seiten (37) umfaßt.

6. Vorrichtung nach Anspruch 4 oder 5, dadurch gekennzeichnet, daß zumindest eine der Spitzen (301) eine geringere Dicke aufweist.

7. Vorrichtung nach einem der Ansprüche 4 bis 6, dadurch gekennzeichnet, daß das Profil (35) auf Basis von Kunstharz hergestellt ist.

8. Vorrichtung nach einem der Ansprüche 1 bis 7, dadurch gekennzeichnet, daß sie Anschläge (40) umfaßt, um das Ausschwenken des Stoßfängers (10) in bezug auf die Karosserie (20) in eine Richtung parallel zur Längsachse (200) zu begrenzen.

9. Vorrichtung nach Anspruch 8, dadurch gekennzeichnet, daß die Anschläge (40) von der Vorrichtung (30) getragen werden.

10. Vorrichtung nach Anspruch 8, dadurch gekennzeichnet, daß die Anschläge (40) zum Teil von dem Stoßfänger (10) und zum Teil von der Karosserie (20) getragen werden.
